# EUROPEAN PATENT APPLICATION

(11) **EP 4 759 466 A1**
(43) Date of publication of application: **17.06.2026**
(21) Application number: 25222640.2
(22) Date of filing: 11.12.2025
(51) Int. Cl.: B23K 9/32

(54) **CONDUCTIVE CONNECTOR ASSEMBLIES FOR WELDING SYSTEMS**

(30) Priority: 11.12.2024 US 202463730750 P; 04.12.2025 US 202519409472
(71) Applicant: Illinois Tool Works Inc., Glenview IL 60025 (US)
(72) Inventor: GELLINGS, Beau, Glenview, 60025 (US); SHELLABARGER, David, Glenview, 60025 (US); SCHNEIDER, Joseph C., Glenview, 60025 (US); MUSKE, Mitchell J., Glenview, 60025 (US)
(74) Representative: HGF

(57) **Abstract**

A conductive connector assembly for an electric welding system is provided. The system includes a wire connection point configured to receive an electrical wire. The assembly includes a first portion having a first contact surface, and a second portion having a second contact surface, the second portion configured to move relative to the first portion. An adjustable fastener is employed to cause movement of the second portion to force a conductor toward the first portion.

## Description

### RELATED APPLICATIONS

The present application claims the benefit of U.S. Provisional Patent Application Serial No. 63/730,750, filed December 11, 2024, entitled "CONDUCTIVE CONNECTOR ASSEMBLY FOR WELDING SYSTEMS." The entirety of U.S. Provisional Patent Application Serial No. 63/730,750 is expressly incorporated herein by reference.

### FIELD OF THE DISCLOSURE

This disclosure relates generally to connectors for welding systems and, more particularly, to conductive connector assemblies for welding systems.

### BACKGROUND

In an electric arc welding process, it is known to use a power cable for conducting current, to power an electric arc welding torch. Typically, a power cable is connected to a power socket of a power supply (and/or a wire feeder) by way of a conductor from the cable. The other end of the cable is connected to the torch and/or a wire feeder.

Conventional cables employ a wide variety of conductors, often requiring power sockets of a particular style, size, shape and/or brand. This makes ensuring the system is useful for a variety of projects and tools challenging. Thus, a system that allows flexibility to receive and employ a variety of cabling is desirable.

### SUMMARY

The present disclosure is directed to a conductive connector assembly for an electric welding system. The system includes a wire connection point configured to receive an electrical wire. The assembly includes a first portion having a first contact surface, and a second portion having a second contact surface, the second portion configured to move relative to the first portion. An adjustable fastener is employed to cause movement of the second portion to force a conductor toward the first portion.

These and other features and advantages of the invention will be more fully understood from the following detailed description of the invention taken together with the accompanying drawings.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1A illustrates an example welding system, in accordance with aspects of this disclosure.
FIG. 1B illustrates an example electrical panel with conductive connectors on power sockets, in accordance with aspects of this disclosure.
FIG. 2 illustrates an example conductive connector, in accordance with aspects of this disclosure.
FIGS. 3A-3D illustrate another example conductive connector, in accordance with aspects of this disclosure.
FIGS. 4A and 4B illustrate another example conductive connector, in accordance with aspects of this disclosure.
FIGS. 5A and 5B illustrate another example conductive connector, in accordance with aspects of this disclosure.

The figures are not necessarily to scale. Where appropriate, similar or identical reference numbers are used to refer to similar or identical components.

### DETAILED DESCRIPTION

This disclosure relates to electric welding generally, and more particularly to conductive connector assembly for electric welding systems. In particular, the conductive connector assembly can include one or more adjustable portions to receive a variety of conductors, as well as fasteners or other devices to ensure reliable contact between the connector and the conductor.

There are a number of conductors commonly in use in welding systems. Some such conductors are of different sizes (e.g., 25 mm to 50 mm), shapes (e.g., round, hexagonal, triangular, etc.), lengths, and/or have proprietary features that alter their geometry. Some conductors have physical features to indicate use (e.g., for polarized power connections).

The disclosed technology creates a variable conductor connection or assembly that can accommodate a variety of sizes, shapes, and/or types of conductors. Such conductor connections can be manipulated to open an aperture to receive the various conductors, and then be tightened about the conductor to ensure a strong, lasting electrical and physical connection between the variable conductor connection and the conductor itself. This offers flexibility for operators to employ a variety of cabling or other equipment with a single welding machine (e.g., power supply, wire feeder, etc.).

Advantageously, this reduces the need for stocking multiple cables and/or couplings. Also advantageously, many such connectors can be adjusted without the use of tools, such that a suitable connection can be made through hand tightening of the adjustable portion. Further, once in place, a locking member can be applied to fix the position of the adjustable portion and/or the conductor therein.

Although some examples describe a single aperture and/or opening for conductors (e.g., to mate with a power socket of a welding power supply), in some examples the variable conductor connection can receive two or more conductors, each with a unique adjustable portion.

In some examples, sensors can be applied to monitor changes in temperature during a welding operation, and/or changes in the position or orientation of the conductor within the power socket (e.g., via optical, electrical, and/or physical monitoring). The sensor can be configured to provide an indication of the continued strength of the connection. If, for example, the sensor data indicates the electrical and/or physical connection has fallen outside of a desired tolerance range, an alert can be activated, and/or the welding system can be configured to stop power delivery.

In some examples, the fastener can include one or both of a ratchet, to incrementally increased tightening of the adjustable portions of the connector around the conductor, and/or a detente indicating the strength of the connection.

In some examples, the suitability of the electrical connection can be tested via a calibration step, which can measure the continuity between components.

In some examples, the conductor connection can be constructed of a conductive material, such as a metal or alloy thereof (e.g., copper, steel, brass, zinc, aluminum, etc.) or a combination thereof.

In disclosed examples, a conductive connector assembly for an electric welding system includes a wire connection point configured to receive an electrical wire; a first portion having a first contact surface; a second portion having a second contact surface, the second portion configured to move relative to the first portion; and an adjustable fastener to cause movement of the second portion to force a conductor toward the first portion.

In some examples, the first portion or the second portion has a profile defined by a straight line, a curved line, a U-shape, a V-shape, or a circle.

In some examples, the first contact surface or the second contact surface includes one or more of a smooth surface, a rough surface, or a ridged topology.

In some examples, the first contact surface includes a conductive cover arranged opposite the second contact surface, the conductive cover in electrical communication with the electrical wire.

In some examples, the electrical wire is encased within a welding cable configured to provide welding type power to an electric welding torch
In some examples, the adjustable fastener that includes a clasp and a pole, the clasp positioned on one of the first or second portion and the pole positioned on the other one of the first or second portion.

In examples, the adjustable fastener is configured to maintain a position of the connector about the conductor when the clasp is engaged with the pole.

In examples, the adjustable fastener is a bolt, a crimp, a ratcheting clasp, or a weldment.

In some examples, the assembly further includes a biasing member to force the first portion and the second portion together.

In examples, the biasing member is a spring.

In some examples, the assembly further includes a handle, wherein one or more of the first portion, the second portion, or the wire connection point are mounted to the handle.

In examples, the first portion or the second portion are configured to move relative to the handle.

In some disclosed examples, a welding cable connector assembly for an electric welding system includes a first portion having a first contact surface; a second portion having a second contact surface, the second portion configured to move relative to the first portion; and a ratcheting gear to allow movement of the first portion or the second portion toward one another and prevent movement of the first portion or the second portion away from one another.

In some examples, the assembly further includes a release switch configured to engage the ratcheting gear in a first position and disengage the ratcheting gear in a second position.

In some disclosed examples, conductive cable connector assembly for an electric welding system includes a first portion having a first contact surface and connected to a first lever; a second portion having a second contact surface and connected to a second lever, the second portion configured to move relative to the first portion; and a housing having an inner cavity to enclose the first or second portion, wherein the first or second portion are configured to move within the housing to force contact with a conductor between the first portion and the second portion.

In some examples, the internal cavity has an internal circumference to receive the electrical conductor.

In examples, the one or more levers extend from the housing and control movement of the first portion or the second portion to force contact between the first surface or the second surface and the electrical conductor.

In some examples, the internal cavity has an internal circumference to receive the electrical conductor.

In some examples, the first or second levers comprises a ratchet to allow movement of the first portion or the second portion toward one another and prevent movement of the first portion or the second portion away from one another.

In examples, assembly further includes a release switch configured to engage the ratcheting gear in a first position and disengage the ratcheting gear in a second position.

In some examples, the housing comprises a nonconductive material.

As used herein, the terms "first" and "second" may be used to enumerate different components or elements of the same type, and do not necessarily imply any particular order.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

As used herein, the term "welding program" or "weld program" includes at least a set of welding parameters for controlling a weld. A welding program may further include other software, algorithms, processes, or other logic to control one or more welding-type devices to perform a weld.

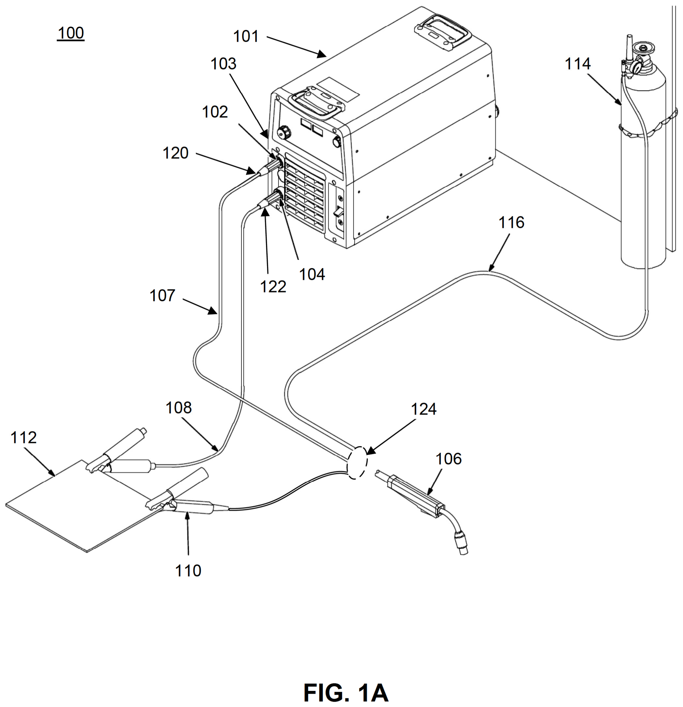

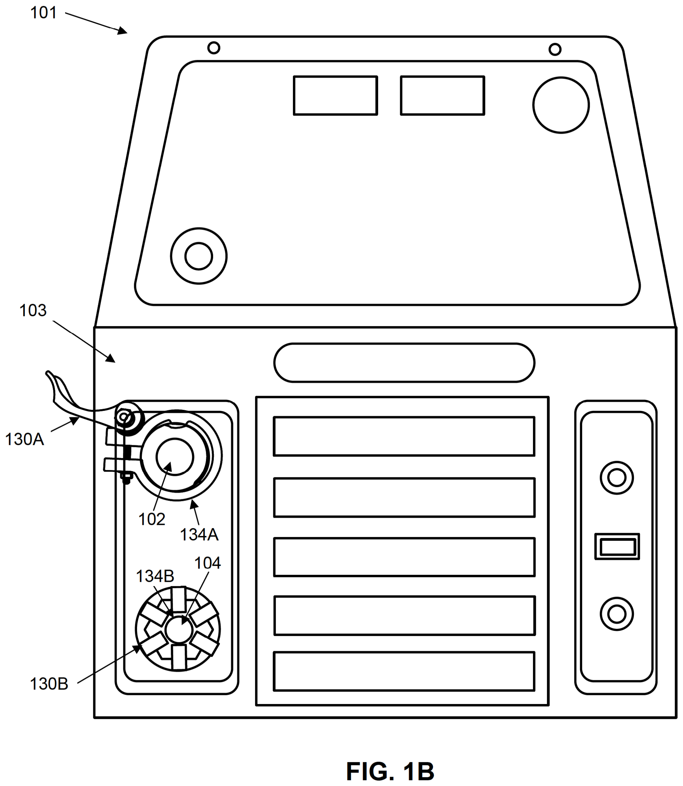

Turning now to the figures, FIG. 1 provides a perspective view of an example welding system 100. The welding-type system 100 includes a welding-type power supply 101 (i.e., a welding-type power source), a gas supply 114, and a welding torch 106. In some example systems, a welding wire feeder is included (e.g., between the power supply 101 and the torch 106).The welding-type power supply 101 generally supplies welding-type power for the various welding-type components and/or accessories of the welding-type system 100 (e.g., the welding wire feeder and/or welding torch 106) through an electrical panel 103 of a housing of the welding-type power supply 101. In the example of FIG. 1, the electrical panel 103 is part of a front panel on the housing of the welding-type power supply 101. In some examples, the electrical panel 103 may instead be part of a rear panel, a side panel, a top panel, and/or a bottom panel of the housing of the welding-type power supply 101. In some examples, an electrical panel is situated on a wire feeder, a remote device, a cable coupling, as a list of non-limiting examples.

As shown in the examples of FIG. 1, the electrical panel 103 includes power sockets 102 and 104, suitable for delivering a welding-type power output. As shown, the power sockets 102 and 104 are connected to power plugs 120 and 122, respectively. For instance, power plugs provide a conductor extending from the cabling, which is received in the power sockets. The power sockets provide electrical connectivity between a power source (e.g., within the power supply 101) and the conductor from the power plugs.

In operation, the power sockets may be configured for positive polarity and/or negative polarity. In some examples, there may be more or fewer than two power sockets, such as a single socket and/or three or more sockets. For instance, as shown in FIG. 1, there may be a third (unlabeled) power socket between the sockets 102 and 104. As shown, the sockets 102 and 104 enter the electrical panel 103 to extend through the housing of the power supply 101, such that a portion of each socket is both inside and outside the housing.

In the example of FIG. 1, the power supply 101 is coupled to the torch 106 (e.g., via a welding wire feeder), and to work piece 112 and through the plugs 120 and 122 and the power sockets 102 and 104. One plug 120 is connected to one or more weld cables 107 which lead to the torch 106 (e.g., via a welding wire feeder), while another plug 122 is coupled to one or more lead cables 108 that lead to the work piece 112 through a work clamp 110.

In the illustrated examples, the welding torch 106 is connected to the power supply 101 (e.g., via a cable and/or coupling 124) in order to supply welding wire, welding-type power, data, and/or shielding gas to the welding torch 106 during operation of the welding-type system 100. In the illustrated example, the welding-type power supply 101 may couple and/or directly supply welding-type power to the welding torch 106. In some examples, the power supply 101 connects to a separate wire feeder, such that the wire feeder may be positioned at some distance from the power supply 101 near a welding location (e.g., near the torch 106). However, it should be understood that the wire feeder, in some examples, may be integrated with the power supply 101. In some examples, a wire feeder may be omitted from the system 100 entirely.

The gas supply 114 supplies a shielding gas and/or shielding gas mixtures to the welding torch 106 via tubing 116. A shielding gas, as used herein, may refer to any gas or mixture of gases that may be provided to the arc and/or weld pool in order to provide a particular local atmosphere (e.g., shield the arc, improve arc stability, limit the formation of metal oxides, improve wetting of the metal surfaces, alter the chemistry of the weld deposit, and so forth). In such an example, the welding wire feeder 14 may regulate the flow of gas from the gas supply 114 to the welding torch 106. In the example of FIG. 1, the gas supply 114 is depicted as coupled directly to the welding torch 106 rather than being coupled to the welding torch 106 through a wire feeder. In some examples, the gas supply 114 may be integral with or separate from the power supply 101. In some examples, no gas supply is used.

As shown in FIG. 1B, conductive connectors are arranged on power sockets 102 and 104 on the electrical panel 103. As explained with respect to FIG. 1A, the power sockets 102 and 104 are configured to receive a conductor (e.g., pins, posts, bolts, fittings, conductive extensions, wires, etc.) of the power plugs 120 and 122. To ensure that the conductive extensions fit securely within the power sockets, the conductive connectors are provided. As shown in FIG. 1B, a first example conductive connector 130A is mounted on/integrated with/coupled to the power socket 102, while a second example conductive connector 130B is mounted on/integrated with/coupled to the power socket 104.

The conductive connectors 130A and 130B have one or more movable portions that allows for adjusting an aperture of an adjustable ring 134A and/or bore 134B, respectively, of each connector. By narrowing the size of the internal bore, contact between the connectors and the inserted conductor is made, creating a solid connection between the cabling and the power supply. The connection is sufficiently strong to ensure both electrical and physical contact is maintained despite the rigors of welding operations and/or welding environments. In other words, the cabling may be physically pulled and/or twisted, but the inserted conductor remains within the power socket due to the force of the conductive connector. Furthermore, power delivery for welding operations may cause temperatures to change. Thus, strong contact is needed to ensure changes in temperature and/or forces acting on the connection do not cause relative movement between conductor and connector, thereby preventing arcing, hotspots, and/or dislodging of the conductor.

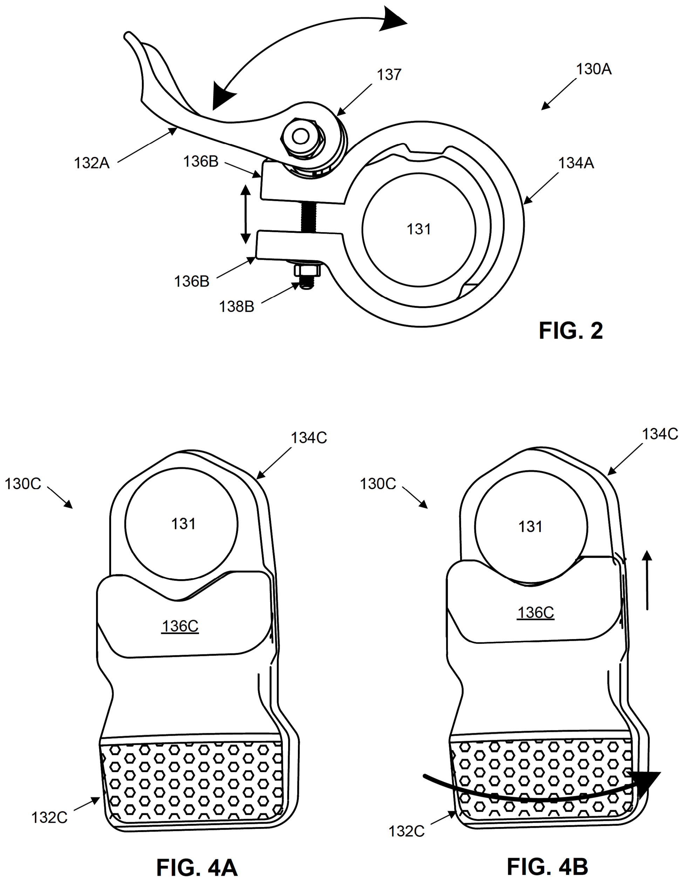

FIGS. 2 through 5B illustrate a variety of example conductive connectors employed to secure conductors within the power sockets. Turning to FIG. 2, conductive connector 130A includes a ring 134A creating an aperture through which conductor 131 (extending from power plugs 120 and/or 122) is inserted. Movement of a lever 132A towards the ring 134A, represented by the arrow, causes the gap between clasps 136B to narrow. As a result, the aperture becomes smaller, creating an electrical and/or physical connection with the conductor 131. In some examples, a bolt or pin 138B can be manipulated to narrow the gap between the clasps before and/or after movement of the lever, which can then be fixed by fastening a nut in place. In some examples, a ratchet 137 can be included with and/or attached to the lever 132A, thereby allowing for incremental adjustments to the aperture.

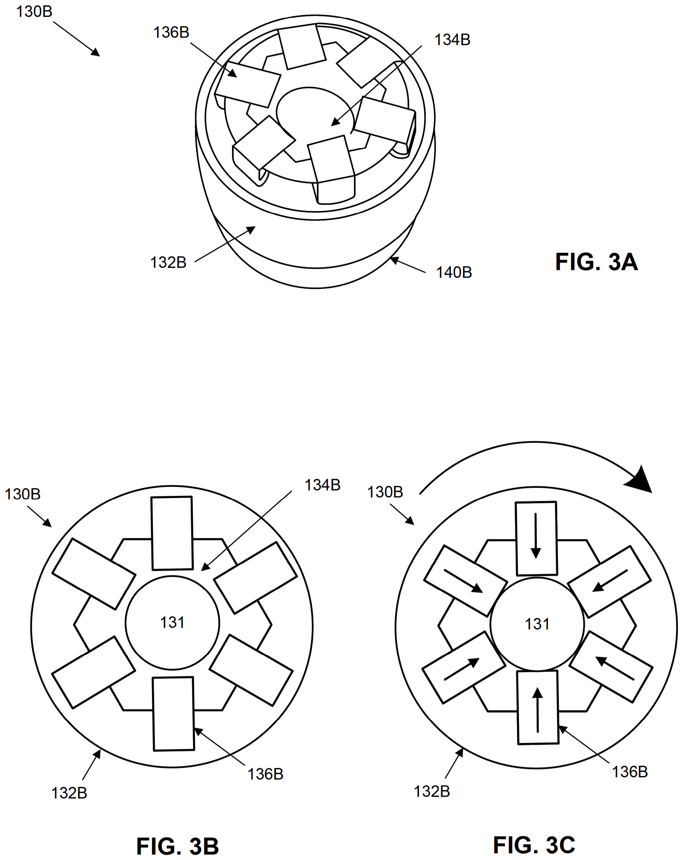

FIG. 3A illustrates a perspective view of a conductive connector 130B. A base 140B can be used to fix the connector 130B to the power socket(s), such as by a screw, weld, adhesive, and/or being formed as a single, integrated device, as a list of non-limiting examples. Although some example conductive connectors are described without specific illustration of a base, each disclosed conductive connector may employ such a base, and some examples conductive connectors that have been described as including a base may not in every application.

As shown in FIGS. 3B and 3C, a collar 132B is exposed about a body of the conductive connector 130B, such that movement (e.g., rotation) of the collar 132B causes movement of one or more movable portions 136B. For instance, rotation of the collar 132B causes radial movement of the portions 136B into bore 134B, such that the portions 136B make physical and electrical contact with the conductor 131, as shown in FIG. 3C. In some examples, the collar 132B can include a ratcheting feature, such that forcible rotation causes incremental tightening about the conductor 131. In some examples, the collar 132B is biased such that the portions 136B are oriented inward. Thus, an operator would rotate the collar outward to move the portions 136B radially to increase the size of the aperture to receive the conductor 131. Once released, the portions 136B makes contact with the conductor, and can be further tightened by rotation of the collar 132B.

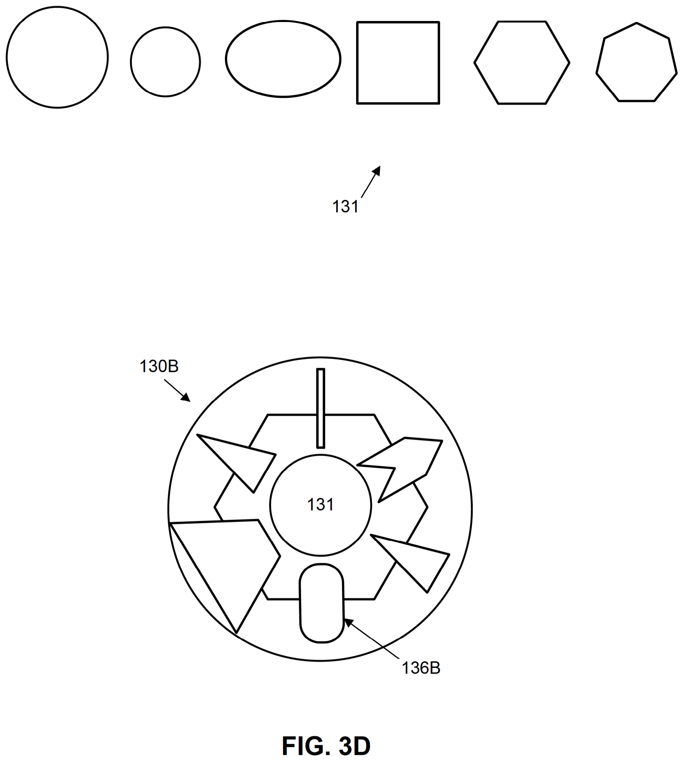

FIG. 3D illustrates alternative examples of movable portions 136B. As shown, the movable portions are not limited to rectangular members, and may take any shape suitable for securing conductor 131. For example, two types of movable portions may be employed in a single connector, such as to accommodate conductors of non-uniform shapes. For instance, as shown, the conductor 131 may be any of a variety of sizes and shapes. The adjustable nature of the connectors allows for accommodating different types of conductors, regardless of shape of the movable portions.

FIGS. 4A and 4B shows another example conductive connector 130C configured to tighten around a conductor 131. As shown in the example conductive connector 130C of FIG. 4A, ring 134C creates an aperture through which conductor 131 is inserted. The aperture allows the conductor 131 to access the power socket(s). Once inserted, the conductive connector 130C can be closed around the conductor 131 to fix it in place to ensure the conductor maintains physical and/or electrical connection with the power socket.

In order to secure the conductor in place, a collar 132C can be moved (rotated) causing movement of clamp 136C toward ring 134C, represented by an arrow. Movement of the clamp 136C causes the gap between clamp 136C and the ring 134C to narrow, making electrical and/or physical connection between the conductor 131 and the power socket.

In some examples, the clamp 136C is biased toward the ring 134C, such that the operator holds down the clamp 136C to receive the conductor 131. Once released, the clamp 136C makes contact with the conductor, and can be further tightened by rotation of the collar 132C. In some examples, an additional or optional locking mechanism (e.g., a latch, ratcheting mechanism, etc.) can further tighten and/or secure the conductor in place.

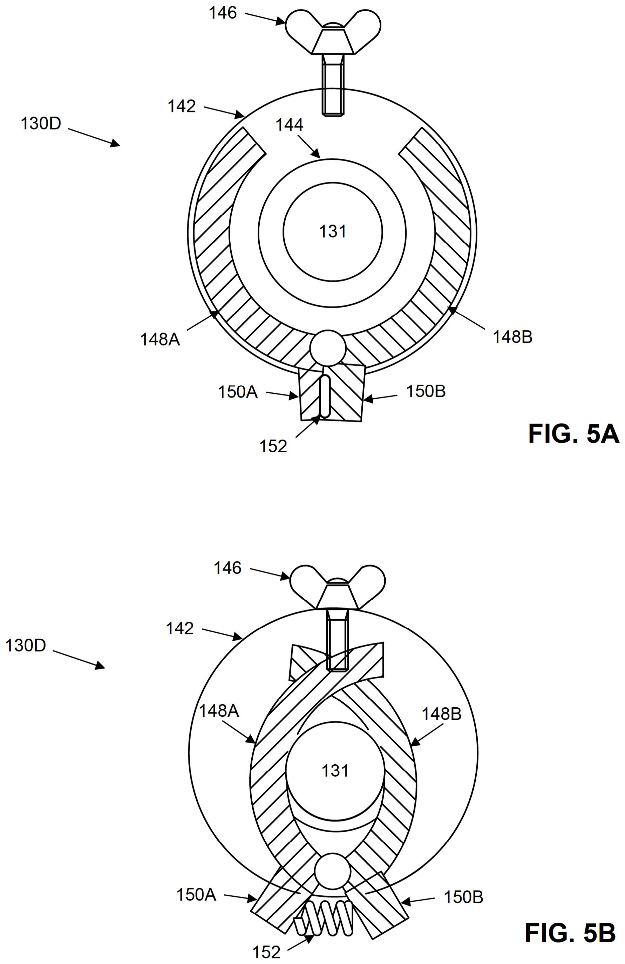

FIG. 5A illustrates another example conductive connector 130D. The connector 130D can be arranged in a housing or frame 142, which can include first and second portions 148A and 148B, one or both of which can be movable about a pivot point. Levers 150A and 150B attach to portions 148A and 148B, respectively, movement of which can cause the portions to open or close around an aperture 144 through which a conductor 131 can be inserted.

FIG. 5A shows the levers pressed together, compressing a spring 152, thereby maximizing the size of the aperture. In FIG. 5B, the levers have been released and the spring expanded, allowing the first and second portions to close onto the conductor 131. As shown, a fastener or bolt 146 may be inserted into the housing 142, further tightening the first and second portions about the conductor. In some examples, the pivot point may include a ratchet, allowing incremental tightening of the first and second portions.

In some examples, the conductive connectors can be constructed of one or more materials, including metals, alloys, polymers, and/or a combination thereof. In some examples, one or more conductive materials can be used to construct the conductive connectors, such as copper, bronze, aluminum, silver, metal alloys, and/or other conductive materials.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A conductive connector assembly for an electric welding system comprising:
   a wire connection point configured to receive an electrical wire;
   a first portion having a first contact surface;
   a second portion having a second contact surface, the second portion configured to move relative to the first portion; and
   an adjustable fastener to cause movement of the second portion to force a conductor toward the first portion.
Clause 2. The conductive connector assembly of clause 1, wherein the first portion or the second portion has a profile defined by a straight line, a curved line, a U-shape, a V-shape, or a circle.
Clause 3. The conductive connector assembly of clause 1, wherein the first contact surface or the second contact surface includes one or more of a smooth surface, a rough surface, or a ridged topology.
Clause 4. The conductive connector assembly of clause 1, wherein the first contact surface includes a conductive cover arranged opposite the second contact surface, the conductive cover in electrical communication with the electrical wire.
Clause 5. The conductive connector assembly of clause 1, wherein the electrical wire is encased within a welding cable configured to provide welding type power to an electric welding torch.
Clause 6. The conductive connector assembly of clause 1, wherein the adjustable fastener that includes a clasp and a pole, the clasp positioned on one of the first or second portion and the pole positioned on the other one of the first or second portion.
Clause 7. The conductive connector assembly of clause 6, wherein the adjustable fastener is configured to maintain a position of the connector about the conductor when the clasp is engaged with the pole.
Clause 8. The conductive connector assembly of clause 6, wherein the adjustable fastener is a bolt, a crimp, a ratcheting clasp, or a weldment.
Clause 9. The conductive connector assembly of clause 1, further comprising a biasing member to force the first portion and the second portion together.
Clause 10. The conductive connector assembly of clause 9, wherein the biasing member is a spring.
Clause 11. The conductive connector assembly of clause 1, further comprising a handle, wherein one or more of the first portion, the second portion, or the wire connection point are mounted to the handle.
Clause 12. The conductive connector assembly of clause 11, wherein the first portion or the second portion are configured to move relative to the handle.
Clause 13. A welding cable connector assembly for an electric welding system comprising:
   a first portion having a first contact surface;
   a second portion having a second contact surface, the second portion configured to move relative to the first portion; and
   a ratcheting gear to allow movement of the first portion or the second portion toward one another and prevent movement of the first portion or the second portion away from one another.
Clause 14. The welding cable connector assembly of clause 13, further comprising a release switch configured to engage the ratcheting gear in a first position and disengage the ratcheting gear in a second position.
Clause 15. A conductive cable connector assembly for an electric welding system comprising:
   a first portion having a first contact surface and connected to a first lever;
   a second portion having a second contact surface and connected to a second lever, the second portion configured to move relative to the first portion; and
   a housing having an inner cavity to enclose the first or second portion, wherein the first or second portion are configured to move within the housing to force contact with a conductor between the first portion and the second portion.
Clause 16. The cable connector assembly of clause 15, wherein the internal cavity has an internal circumference to receive the electrical conductor.
Clause 17. The cable connector assembly of clause 16, wherein the one or more levers extend from the housing and control movement of the first portion or the second portion to force contact between the first surface or the second surface and the electrical conductor.
Clause 18. The cable connector assembly of clause 15, wherein the internal cavity has an internal circumference to receive the electrical conductor.
Clause 19. The cable connector assembly of clause 15, wherein the first or second levers comprises a ratchet to allow movement of the first portion or the second portion toward one another and prevent movement of the first portion or the second portion away from one another.
Clause 20. The cable connector assembly of clause 19, further comprising a release switch configured to engage the ratcheting gear in a first position and disengage the ratcheting gear in a second position.
Clause 21. The cable connector assembly of clause 15, wherein the housing comprises a nonconductive material.

## Claims

1. A conductive connector assembly for an electric welding system comprising:
a wire connection point configured to receive an electrical wire;
a first portion having a first contact surface;
a second portion having a second contact surface, the second portion configured to move relative to the first portion; and
an adjustable fastener to cause movement of the second portion to force a conductor toward the first portion.

2. The conductive connector assembly of claim 1, wherein the first portion or the second portion has a profile defined by a straight line, a curved line, a U-shape, a V-shape, or a circle.

3. The conductive connector assembly of claim 1, wherein the first contact surface or the second contact surface includes one or more of a smooth surface, a rough surface, or a ridged topology or wherein the first contact surface includes a conductive cover arranged opposite the second contact surface, the conductive cover in electrical communication with the electrical wire.

4. The conductive connector assembly of claim 1, wherein the electrical wire is encased within a welding cable configured to provide welding type power to an electric welding torch.

5. The conductive connector assembly of claim 1, wherein the adjustable fastener that includes a clasp and a pole, the clasp positioned on one of the first or second portion and the pole positioned on the other one of the first or second portion.

6. The conductive connector assembly of claim 5, wherein the adjustable fastener is configured to maintain a position of the connector about the conductor when the clasp is engaged with the pole or wherein the adjustable fastener is a bolt, a crimp, a ratcheting clasp, or a weldment.

7. The conductive connector assembly of claim 1, further comprising a biasing member to force the first portion and the second portion together, and optionally wherein the biasing member is a spring.

8. The conductive connector assembly of claim 1, further comprising a handle, wherein one or more of the first portion, the second portion, or the wire connection point are mounted to the handle, and optionally wherein the first portion or the second portion are configured to move relative to the handle.

9. A welding cable connector assembly for an electric welding system comprising:
a first portion having a first contact surface;
a second portion having a second contact surface, the second portion configured to move relative to the first portion; and
a ratcheting gear to allow movement of the first portion or the second portion toward one another and prevent movement of the first portion or the second portion away from one another, and optionally wherein
the welding cable connector assembly further comprising a release switch configured to engage the ratcheting gear in a first position and disengage the ratcheting gear in a second position.

10. A conductive cable connector assembly for an electric welding system comprising:
a first portion having a first contact surface and connected to a first lever;
a second portion having a second contact surface and connected to a second lever, the second portion configured to move relative to the first portion; and
a housing having an inner cavity to enclose the first or second portion, wherein the first or second portion are configured to move within the housing to force contact with a conductor between the first portion and the second portion.

11. The cable connector assembly of claim 10, wherein the internal cavity has an internal circumference to receive the electrical conductor, and optionally wherein the one or more levers extend from the housing and control movement of the first portion or the second portion to force contact between the first surface or the second surface and the electrical conductor.

12. The cable connector assembly of claim 10, wherein the internal cavity has an internal circumference to receive the electrical conductor.

13. The cable connector assembly of claim 10, wherein the first or second levers comprises a ratchet to allow movement of the first portion or the second portion toward one another and prevent movement of the first portion or the second portion away from one another.

14. The cable connector assembly of claim 13, further comprising a release switch configured to engage the ratcheting gear in a first position and disengage the ratcheting gear in a second position.

15. The cable connector assembly of claim 10, wherein the housing comprises a nonconductive material.
